# EUROPÄISCHE PATENTSCHRIFT

(11) **EP 0 302 273 B1**
(45) Veröffentlichungstag und Bekanntmachung des Hinweises auf die Patenterteilung: **15.12.1993**
(21) Anmeldenummer: 88111238.7
(22) Anmeldetag: 13.07.1988
(51) Int. Cl.: F28D 20/00, B60H 1/00, F16L 59/06

(54) **Wärmespeicher, insbesondere Latentwärmespeicher für durch Motorabwäre gespeiste Kraftfahrzeugheizungen**
Heat storage device, especially a latent-heat one for motor vehicle heating systems, supplied with waste heat from the engine
Stockage de chaleur, en particulier stockage de chaleur latente, pour le chauffage d'un véhicule par les pertes thermiques du moteur

(30) Priorität: 29.07.1987 DE 3725163
(43) Veröffentlichungstag der Anmeldung: 08.02.1989
(73) Patentinhaber: Schatz Thermo System GmbH, D-82131 Gauting (DE)
(72) Erfinder: Schatz, Oskar, Dr.-Ing., D-82131 Gauting (DE)
(74) Vertreter: Patentanwälte Hauck, Graalfs, Wehnert, Döring, Siemons

(56) Entgegenhaltungen:
- DE-A- 3 212 043
- DE-A- 3 245 027
- FR-A- 2 379 751
- US-A- 3 152 033
- PATENT ABSTRACTS OF JAPAN, Band 7, Nr. 227 (M-248)[1372], 7. Oktober 1983; & JP-A-58 120 085 (MATSUSHITA) 16-07-1983

## Beschreibung

Die Erfindung betrifft einen Wärmespeicher, insbesondere Latentwärmespeicher für durch Motorabwärme gespeiste Kraftfahrzeugheizungen, mit einem einen Speicherkern umschließenden inneren Gehäuse, mit einem das innere Gehäuse mit Abstand umgebenden äußeren Gehäuse, wobei der Zwischenraum zwischen innerem und äußerem Gehäuse evakuiert ist, und mit einer tragfähigen Wärmeisolierung zwischen dem inneren und dem äußeren Gehäuse.

Es ist bekannt, den Zwischenraum zwischen innerem und äußerem Gehäuse als Vakuumspalt zu evakuieren, so daß bei geringer Spaltbreite eine hohe Isolierwirkung erzielt wird. Dabei ist es ebenfalls bekannt, den Spalt vor der Evakuierung mit mikroporösen Stoffen zu füllen, die dazu dienen, das äußere Gehäuse gegenüber dem inneren Gehäuse abzustützen, um den durch das Vakuum verursachten Druck aufzunehmen, wodurch das äussere Gehäuse zur Reduzierung von Gewicht und Kosten verhältnismäßig dünnwandig ausgeführt werden kann.

Um eine hochwirksame Isolierung zu erzielen, ist es zweckmäßig, im Vakuumspalt ein Hochvakuum zu erzeugen. Um ein derartiges Hochvakuum zuverlässig über eine längere Zeitspanne aufrechtzuerhalten, ist es erforderlich, die dem Vakuumspalt zugewandten Oberflächenschichten des inneren und des äußeren Gehäuses zu entgasen. Sowohl die Evakuierung als auch die Entgasung wird durch den hohen Fließwiderstand der tragfähigen Isolierung aus mikroporösen Stoffen behindert.

Die durch den Aufbau eines Hochvakuums angestrebte hochwirksame Isolierung erfährt eine gewisse Beeinträchtigung durch die von der tragfähigen Isolierung verursachte Festkörper-Wärmeleitung zwischen innerem und äußerem Gehäuse.

Aufgabe der Erfindung ist es, einen Wärmespeicher der eingangs genannten Art derart auszugestalten, daß er bei möglichst geringem Gewicht und möglichst geringen Kosten eine über einen längeren Zeitraum aufrechtzuerhaltende, hochwirksame Wärmeisolierung aufweist.

Die Lösung dieser Aufgabe besteht erfindungsgemäß darin, daß die tragfähige Wärmeisolierung aus voneinander getrennten Stützkörpern besteht, die auf durch Zwischenräume voneinander getrennte Stützzonen verteilt sind.

Hierdurch werden im Vakuumspalt Strömungspfade für die abzuführenden Gase geschaffen wodurch die Entgasung und Evakuierung und damit die Erzeugung eines dauerhaften Hochvakuums wesentlich erleichtert wird.

Eine vorteilhafte Ausgestaltung besteht darin, daß die tragfähige Wärmeisolierung auf einzelne, durch Zwischenräume voneinander getrennte Stützzonen verteilt ist, wodurch die Festkörper-Wärmeleitung reduziert wird.

Wie das Beispiel des Einsatzes derartiger Wärmespeicher bei Kraftfahrzeugheizungen zeigt, gibt es Anwendungsbereiche, bei welchen auf ein möglichst geringes Gewicht des Wärmespeichers zu achten ist. Ein das Gesamtgewicht in nennenswertem Maße beeinflussender Faktor ist bei derartigen Wärmespeichern die Isolierung zwischen dem inneren und dem äußeren Gehäuse und das Gewicht dieser Gehäuse. Durch die tragfähige Isolierung besteht die Möglichkeit, das äußere Gehäuse entsprechend schwächer auszubilden und dadurch das Gewicht zu reduzieren. Außerdem wird dadurch eine größere Freizügigkeit bei der Auswahl der jeweils geeigneten Gehäuseform erreicht. Das tragfähige Isoliermaterial ist aber verhältnismäßig schwer, so daß seine Verwendung der Forderung nach Gewichtseinsparung entgegensteht. Durch die Aufteilung der tragfähigen Isolierung auf einzelne, durch Zwischenräume voneinander getrennte Stützzonen wird das Gewicht der tragfähigen Isolierung reduziert. Zwar wird sich unter dem Einfluß des zwischen innerem und äußerem Gehäuse befindlichen Vakuums die Gehäusewandung, insbesondere die Wandung des äußeren Gehäuses, verformen, doch beeinträchtigt eine derartige Verformung die Funktion des Wärmespeichers nicht und kann deshalb in Kauf genommen werden.

Nach einer weiteren zweckmäßigen Ausgestaltung können in den Zwischenräumen Strahlenschilde angebracht werden, wodurch die Wärmeverluste weiter reduziert werden. Es können in jedem Zwischenraum Gruppen von Strahlenschilden angeordnet sein, wobei die Wärmeverluste bei genügend enger Anordnung der Strahlenschilde weiter reduziert werden können.

Eine andere zweckmäßige Ausbildung besteht darin, daß in den Zwischenräumen ein leichtes, nicht tragfähiges Isoliermaterial angeordnet ist. Dadurch wird ohne wesentliche Auswirkung auf das Gesamtgewcht die Isolierwirkung verbessert.

Eine besonders vorteilhafte Ausgestaltung besteht darin, daß die Wärmeisolerung jeder Zone in einen am inneren Gehäuse abgestützten inneren Abschnitt und einen am äußeren Gehäuse abgestützten äußeren Abschnitt unterteilt ist, daß der innere und der äußere Abschnitt derart gegenenander versetzt sind, daß ihre Querschnitte in Stützrichtung betrachtet einen Abstand voneinander aufweisen, und daß zwischen den freien Enden des inneren und des äußeren Abschnitts ein Zuganker eingespannt ist. Dadurch wird die Festkörper-Wärmeleitung weiter reduziert, weil die tragfähige Isolierung keine direkte Verbindung zwischen dem inneren und dem äußeren Gehäuse aufrechterhält. Eine besonders zweckmäßige Ausgestaltung besteht dabei darin, daß der Zuganker aus einem Material mit geringer Wärmeleitfähigkeit besteht. Beispielsweise kann der Zuganker eine den Raum zwischen innerem und äußerem Gehäuse in einen inneren Bereich und einen äußeren Bereich unterteilende Folie sein.

Die Stützkörper können aus einem zumindest annähernd formstabilen Isoliermaterial, wie insbesondere Glasfasermaterial, bestehen. Es besteht aber auch die Möglichkeit, wegen des relativ hohen Gewichts dieses formstabilen Isoliermaterial, wegen des geringeren Gewichts ein nicht formstabiles Isoliermaterial einzusetzen, welches von Wandungen umschlossen und dadurch zu tragfähigen Einheiten zusammengefaßt wird. Eine vorteilhafte Ausgestaltung der Erfindung ist es deshalb, daß die Stützkörper als kissenartige, verformbare, flächenhaft am inneren und äußeren Gehäuse anliegende Elemente ausgebildet sind, bei welchen eine dünnwandige, biegeweiche, weitgehend spannungsfrei verformbare, eine geringe Zugdehnung aufweisende Wandung eine Füllung aus einem Isoliermaterial umschließt, welches aus Partikeln mit untereinander geringer Reibung besteht. Dabei kann die Füllung aus einem schüttfähigen Isoliermaterial oder aus einem Gas geringer Wärmeleitfähigkeit bestehen.

Vorzugsweise besteht die Wandung ebenfalls aus einem Material mit geringer Wärmeleitfähigkeit.

Bei Verwendung einer schüttfähigen Füllung kann die Wandung vorzugsweise gasdurchlässig ausgebildet sein. Die Wandung kann beispielsweise aus Drahtgeflecht oder aus einer porösen Membran bestehen. Als Füllung kann vorzugsweise mikroporöses Isoliermaterial verwendet werden.

Die Verwendung von Stützkörpern in Form dieser kissenartigen Elemente ermöglicht es, auch leichtes, schüttfähiges oder rieselfähiges Isoliermaterial auf einfache Weise in den Zwischenräumen zwischen dem inneren und dem äußeren Gehäuse einzubringen und es an allen Stellen zu positionieren, an denen eine Stützwirkung erwünscht ist. Dabei wird das Isoliermaterial daran gehindert, in Bereiche einzudringen, in denen es unerwünscht ist. Außerdem kann sich das Material "setzen", ohne daß bei langer Betriebszeit die Stütz- und Isolierwirkung dadurch verlorengeht und ohne daß sich bei längerer Betriebszeit unerwünschte Verdichtungs- oder Verdünnungszonen bilden.

Trotz der Verwendung eines schüttfähigen Materials können die mit Isoliermaterial versehenen Bereiche auf ausgewählte Stützzonen beschränkt werden, wodurch der Einsatz an Isoliermaterial auf die Menge beschränkt werden kann, die für die erwünschte Stützwirkung erforderlich ist, wobei aber andererseits auch die Drainage bei der Evakuierung bzw. Entgasung erleichtert wird.

Die flächenhafte Anlage der kissenförmigen Stützkörper am äußeren und inneren Gehäuse ist zur sicheren Abstützung erforderlich und wird durch entsprechende Wahl des Befüllungsgrades der Kissenwandung vor der Montage erreicht. Zweckmäßigerweise werden die Stützkörper bei der Montage im Zwischenraum zwischen innerem und äußerem Gehäuse mit Vorspannung eingesetzt, d.h. eingepreßt, um eine zuverlässige Positionierung zu erreichen.

Die Form der Stützkörper kann der Gehäuseform des Wärmespeichers angepaßt werden, wobei mit der Bezeichnung der Stützkörper als kissenartig nicht die Form, sondern die Verformbarkeit dieser Stützkörper gekennzeichnet werden soll. Die kissenartigen Elemente können die Form von mehr oder weniger flachgedrückten Bällen aufweisen, sie können aber auch wurstförmig ausgebildet sein und dabei in gerader Richtung oder spiralig oder ringförmig verlaufen und beispielsweise auch in Form konzentrischer Ringe angeordnet sein.

Anhand der nun folgenden Beschreibung der in der Zeichnung dargestellten Ausführungsbeispiele der Erfindung wird diese näher erläutert.

Es zeigt:
- Fig. 1: eine perspektivische Außenansicht eines erfindungsgemäß ausgebildeten Wärmespeichers vor Aufbau des Vakuums zwischen innerem und äußerem Gehäuse,
- Fig. 2: einen Schnitt durch den in Fig. 1 dargestellten Wärmespeicher, wobei der im inneren Gehäuse angeordnete Speicherkern nicht dargestellt ist,
- Fig. 3: einen Detailschnitt durch den Wandungsbereich zwischen innerem und äußerem Gehäuse,
- Fig. 4: einen der Fig. 3 entsprechenden Schnitt bei einer anderen Ausführungsform und
- Fig. 5: einen Detailschnitt durch einen eingebauten kissenförmigen Stützkörper, der mit schüttfähigem Isoliermaterial gefüllt ist.

Ein insgesamt mit 10 bezeichneter Latentwärmespeicher besteht aus einem äußeren Gehäuse 12, das allseits mit Abstand ein inneres Gehäuse 14 umgibt, in welchem der wärmespeichernde Speicherkern angeordnet ist. Der Aufbau eines derartigen Speicherkerns ist dem Fachmann beispielsweise aus der DE-OS 32 45 027 bekannt, weshalb er hier nicht näher erläutert wird und nur allgemein mit 16 bezeichnet ist.

Für den Zu- und Abfluß des wärmetransportierenden Übertragungsmittels, als welches hier das Kühlwasser eines Verbrennungsmotors dient, ist eine Zuflußleitung 20 und eine Abflußleitung 22 vorgesehen, die in das innere Gehäuse 14 münden und durch den die Wärmeisolierung aufnehmenden Zwischenraum 18 zwischen innerem und äußerem Gehäuse hindurch und aus dem äußeren Gehäuse 12 nach außen geführt sind.

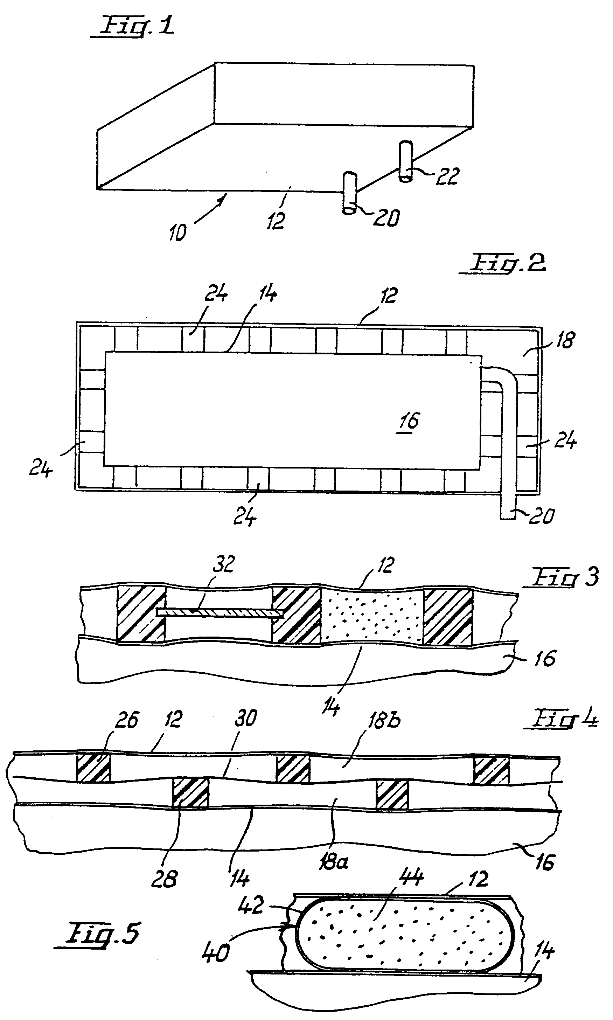

Um das äußere Gehäuse 12 gegenüber dem inneren Gehäuse 14 abzustützen, sind mit Abständen voneinander Stützkörper 24 (Fig. 2, 3) angeordnet, die aus einem tragfähigen Isoliermaterial, vorzugsweise aus Glasfaser, bestehen. Hierdurch entstehen durch die Zwischenräume voneinander getrennte Stützzonen, die den für die Wärmeisolierung erforderlichen Abstand zwischen dem äußeren Gehäuse 12 und dem inneren Gehäuse 14 aufrechterhalten, wobei aber durch den Aufbau eines isolierenden Vakuums zwischen den beiden Gehäusen 12 und 14 die zwischen den Stützzonen befindlichen Gehäuseabschnitte in Richtung auf die jeweils gegenüberliegende Wandung des anderen Gehäuses verformt werden, wie dies in den Fig. 3 und 4 dargestellt ist. Diese Verformung beeinträchtig aber die Funktion des Wärmespeichers und des Isolierbereichs nicht und kann deshalb insbesondere im Hinblick auf die erzielbare Gewichtseinsparung in Kauf genommen werden.

Bei dem in Fig. 3 dargestellten Ausführungsbeispiel sind in den Stützzonen stegförmige Stützkörper 24 aus dem tragfähigen Isoliermaterial angeordnet, welche den vollen Abstand zwischen dem äußeren Gehäuse 12 und dem inneren Gehäuse 14 überbrücken. In den Zwischenräumen zwischen den Stützkörpern 24 können Strahlenschilde 32 angeordnet werden, es kann aber auch ein nicht tragfähiges Isoliermaterial 34 mit verhältnismäßig geringem Gewicht eingefüllt werden.

Die Fig. 4 zeigt eine besonders vorteilhafte Ausgestaltung, bei welcher an der Innenseite des äußeren Gehäuses 12 stegförmige Stützkörper 26 und an der Außenseite des inneren Gehäuses 14 stegförmige Stützkörper 28 angeordnet sind, welche jeweils aus tragfähigem Isoliermaterial bestehen und deren Höhe geringer ist als der Abstand zwischen dem äußeren Gehäuse 12 und dem inneren Gehäuse 14. Außerdem sind die Stützkörper 26 und 28 jeweils um den halben Abstand der Stützkörper 26 bzw. 28 zueinander versetzt. Zwischen dem äußeren Gehäuse 12 und dem inneren Ge-häuse 14 ist eine Folie 30 angeordnet, die zwischen den Stürzkörpern 26 und 28 eingespannt ist und an deren vom jeweils zugeordneten Gehäuse 12 bzw. 14 abgewandter Stirnfläche anliegt, so daß die Folie einen Zuganker bildet, der die Aufrechterhaltung des Abstandes zwischen dem äußeren Gehäuse 12 und dem inneren Gehäuse 14 gewährleistet und den Zwischenraum 18 in einen inneren Bereich 18a und einen äußeren Bereich 18b unterteilt.

Vorzugsweise besteht die Folie 30 aus einem Material mit geringer Wärmeleitfähigkeit. Durch die versetzte Anordnung der Stützkörper 26 und 28 ist die Möglichkeit der Wärmeleitung zwischen dem äußeren Gehäuse 12 und dem inneren Gehäuse 14 weiter reduziert, so daß sich bei dieser Ausführungsform zusätzlich zu dem geringen Gewicht des Wärmespeiches noch eine besonders gute Isolierung ergibt.

Die Fig. 5 zeigt einen kissenartigen Stützkörper 40 mit einer durch eine poröse Membran gebildeten Wandung 42, die vor dem Einbau zwischen das äußere Gehäuse 12 und das innere Gehäuse 14 des Wärmespeichers 10 mit einer Füllung 44 aus rieselfähigem, mikroporösem Isoliermaterial so weit gefüllt und dann verschlossen wurde, daß in der in Fig. 5 gezeigten Einbauposition der Stützkörper bei flächenhafter Anlage am äußeren Gehäuse 12 und am inneren Gehäuse 14 unter Spannung steht, d.h., daß durch den vom äußeren Gehäuse 12 und vom inneren Gehäuse 14 auf ihn ausgeübten Stützdruck und die dadurch bewirkte Pressung des Füllmaterials 44 eine Art statischer Druck im Stützkörper 40 entsteht.

## Patentansprüche

1. Wärmespeicher, insbesondere Latentwärmespeicher (10) für durch Motorabwärme gespeiste Kraftfahrzeugheizungen, mit einem einen Speicherkern (16) umschließenden inneren Gehäuse (14), mit einem das innere Gehäuse mit Abstand umgebenden äußeren Gehäuse (12), wobei der Zwischenraum zwischen innerem und äußerem Gehäuse evakuiert ist, und mit einer tragfähigen Wärmeisolierung (24, 26, 28, 40) zwischen dem inneren und dem äußeren Gehäuse, *dadurch gekennzeichnet,* daß die tragfähige Wärmeisolierung (24, 26, 28, 40) aus voneinander getrennten Stützkörpern besteht, die auf durch Zwischenräume voneinander getrennte Stützzonen verteilt sind.

2. Wärmespeicher nach Anspruch 1, *dadurch gekennzeichnet,* daß in den Zwischenräumen Strahlenschilde (32) angeordnet sind.

3. Wärmespeicher nach Anspruch 1, *dadurch gekennzeichnet*, daß in den Zwischenräumen ein leichtes, nicht tragfähiges Isoliermaterial (34) angeordnet ist.

4. Wärmespeicher nach einem der Ansprüche 1 bis 3, *dadurch gekennzeichnet*, daß die Wärmeisolierung jeder Zone in einen am inneren Gehäuse (14) abgestützten inneren Abschnitt (28) und einen am äußeren Gehäuse (12) abgestützten äußeren Abschnitt (26) unterteilt ist, daß der innere und der äußere Abschnitt derart gegeneinander versetzt sind, daß ihre Querschnitte in Stützrichtung betrachtet einen Abstand voneinander aufweisen, und daß zwischen den freien Enden des inneren und des äußeren Abschnitts ein Zuganker (30) eingespannt ist.

5. Wärmespeicher nach Anspruch 4, *dadurch gekennzeichnet,* daß der Zuganker (30) aus einem Material mit geringer Wärmeleitfähigkeit besteht.

6. Wärmespeicher nach Anspruch 4 oder 5, *dadurch gekennzeichnet*, daß der Zuganker (30) eine den Raum zwischen innerem und äußerem Gehäuse in einen inneren Bereich (18a) und einen äußeren Bereich (18b) unterteilende Folie ist.

7. Wärmespeicher nach einem der Ansprüche 1 bis 6, *dadurch gekennzeichnet*, daß die Stützkörper (24, 26, 28) aus einem zumindest annähernd formstabilen Isoliermaterial bestehen.

8. Wärmespeicher nach Anspruch 7, *dadurch gekennzeichnet,* daß die Stützkörper (24, 26, 28) aus Glasfasermaterial bestehen.

9. Wärmespeicher nach einem der Ansprüche 1 bis 6, *dadurch gekennzeichnet*, daß die Stützkörper (40) als kissenartige, verformbare, flächenhaft am inneren (14) und äußeren (12) Gehäuse anliegende Elemente ausgebildet sind, bei welchen eine dünnwandige, biegeweiche, weitgehend spannungsfrei verformbare, eine geringe Zugdehnung aufweisende Wandung (42) eine Füllung (44) aus einem Isoliermaterial umschließt, das aus Partikeln mit untereinander geringer Reibung besteht.

10. Wärmespeicher nach Anspruch 9, *dadurch gekennzeichnet,* daß die Füllung (44) aus einem schüttfähigen Isoliermaterial besteht.

11. Wärmespeicher nach Anspruch 9, *dadurch gekennzeichnet*, daß die Füllung aus einem Gas geringer Wärmeleitfähigkeit besteht.

12. Wärmespeicher nach Anspruch 9 bis 11, *dadurch gekennzeichnet*, daß die Wandung (42) aus einem Material mit geringer Wärmeleitfähigkeit besteht.

13. Wärmespeicher nach Anspruch 10, *dadurch gekennzeichnet*, daß die Wandung (42) gasdurchlässig ist.

14. Wärmespeicher nach Anspruch 10, *dadurch gekennzeichnet*, daß die Wandung (42) aus Drahtgeflecht besteht.

15. Wärmespeicher nach Anspruch 10, *dadurch gekennzeichnet*, daß die Wandung (42) ein poröse Membran ist.

16. Wärmespeicher nach den Ansprüchen 10 oder 12 bis 15, *dadurch gekennzeichnet*, daß die Füllung (44) aus einem mikroporösen Isoliermaterial besteht.

## Claims

1. A heat storage, in particular a latent heat storage (10) for automotive vehicle heating systems supplied with waste heat from the engine, comprising an inner housing (14) enclosing a storage core (16), an outer housing (12) enclosing the inner housing in spaced relationship thereto, the space between the inner and outer housings being evacuated, and a supporting heat insulating means (24,26,28, 40) between the inner and outer housings, characterized in that the supporting heat insulating means (24,26,28,40) comprise supporting members separate from each other, which supporting members are disposed in supporting aereas separated from each other by interspaces.

2. The heat storage of claim 1, characterized in that radiation shields (32) are arranged in the interspaces.

3. The heat storage of claim 1, characterized in that a lightweight, non-supporting insulating material (34) is disposed in the interspaces.

4. The heat storage of any of claims 1 to 3, characterized in that the heat insulating means of each supporting area is divided in an inner portion (28) supported at the inner housing (14) and an outer portion (26) supported at the outer housing (12), in that the inner and outer portions are staggered with respect to each other so that their cross sections are spaced from each other in the supporting direction, and in that a tie anchor (30) is clamped between the free ends of said inner and outer portions.

5. The heat storage of claim 4, characterized in that the tie anchor (30) comprises a material of low heat conductivity.

6. The heat storage of claim 4 or 5, characterized in that the tie anchor (30) is a foil dividing the space between the inner and outer housings in an inner area (18a) and an outer area (18b).

7. The heat storage of any of claims 1 to 6, characterized in that said supporting members (24,26,28) are made of a at least substantially dimensionally stable insulating material.

8. The heat storage of claim 7, characterized in that said supporting members (24,26,28) are made of a glass fiber material.

9. The heat storage of any of claims 1 to 6, characterized in that said supporting members (40) are formed as pillow-shaped, deformable elements in planar engagement with the inner (14) and outer (12) housings, a thin flexible wall means (42) deformable substantially without strain and of reduced tensile stress enclosing a filler (44) of insulating material made of particles exhibiting low friction with respect to each other.

10. The heat storage of claim 9, characterized in that the filler (44) is made of a pourable insulating material.

11. The heat storage of claim 9, characterized in that the filler is made of a gas of low heat conductivity.

12. The heat storage of claims 9 to 11, characterized in that said wall means (42) is made of a material of low heat conductivity.

13. The heat storage of claim 10, characterized in that said wall means (42) is gas permeable.

14. The heat storage of claim 10, characterized in that said wall means (42) comprises a wire mesh material.

15. The heat storage of claim 10, characterized in that said wall means (42) is a porous diaphragm.

16. The heat storage of claims 10 or 12 to 15, characterized in that the filler (44) is made of a microporous insulating material.

## Revendications

1. Accumulateur de stockage de chaleur, en particulier accumulateur (10) de chaleur latente, pour le chauffage de véhicules à moteur par les pertes thermiques du moteur, comportant un carter intérieur (14) enfermant un noyau d'accumulateur (16);
un carter extérieur (12) entourant le carter intérieur, à une certaine distance, étant entendu qu'on a fait le vide dans l'espace intercalaire entre les carters intérieur et extérieur, et, entre les carters intérieur et extérieur, un isolant thermique (24, 26, 28, 40) formant support,
caractérisé en ce que l'isolant thermique (24, 26, 28, 40) formant support est constitué par des corps formant appuis, séparés les uns des autres, qui sont répartis dans des zones d'appui séparées les unes des autres par des espaces intercalaires.

2. Accumulateur de stockage de chaleur suivant la revendication 1, caractérisé en ce que, dans les espaces intercalaires, sont disposés des écrans anti-rayonnement (32).

3. Accumulateur de stockage de chaleur suivant la revendication 1, caractérisé en ce que, dans les espaces intercalaires, est disposé un matériau isolant léger (34) sans capacité portante.

4. Accumulateur de stockage de chaleur suivant l'une quelconque des revendications 1 à 3, caractérisé en ce que l'isolant thermique de chaque zone est divisé en une partie intérieure (28) prenant appui sur le carter intérieur (14) et en une partie extérieure (26) prenant appui sur le carter extérieur (12), en ce que les parties intérieure et extérieure sont décalées l'une par rapport à l'autre de telle façon que leur sections, considérées dans la direction d'appui, présentent une certaine distance l'une par rapport à l'autre, et en ce qu'entre les extrémités libres des parties intérieure et extérieure, est tendu un tirant d'ancrage (30).

5. Accumulateur de stockage de chaleur suivant la revendication 4, caractérisé en ce que le tirant d'ancrage (30) est constitué par un matériau présentant une faible conductibilité thermique.

6. Accumulateur de stockage de chaleur suivant la revendication 4 ou la revendication 5, caractérisé en ce que le tirant d'ancrage (30) est une feuille divisant l'espace compris entre le carter intérieur et le carter extérieur en une zone intérieure (18a) et une zone extérieure (18b).

7. Accumulateur de stockage de chaleur suivant l'une quelconque des revendications 1 à 6, caractérisé en ce que les corps formant appuis (24, 26, 28) sont constitués d'un matériau isolant, de forme au moins à peu près stable.

8. Accumulateur de stockage de chaleur suivant la revendication 7, caractérisé en ce que les corps formant appuis (24, 26, 28) sont constitués d'un matériau en fibres de verre.

9. Accumulateur de stockage de chaleur suivant l'une quelconque des revendications 1 à 6, caractérisé en ce que les corps formant appuis (40) sont réalisés sous la forme d'éléments en forme de coussins, déformables, dont la surface est au contact avec le carter intérieur (14) et le carter extérieur (12), et dans lesquels un cloisonnement (42), à paroi mince, fléchissant facilement, pouvant se déformer sans contrainte, et présentant un faible allongement à la traction, enferme une matière de remplissage (44) en matériau isolant, qui est constituée de particules présentant entre elles un frottement faible.

10. Accumulateur de stockage de chaleur suivant la revendication 9, caractérisé en ce que la matière de remplissage (44) est constituée d'un matériau isolant susceptible de s'écouler.

11. Accumulateur de stockage de chaleur suivant la revendication 9, caractérisé en ce que la matière de remplissage (44) est constituée par un gaz présentant une faible conductibilité thermique.

12. Accumulateur de stockage de chaleur suivant les revendications 9 à 11, caractérisé en ce que le cloisonnement (42) est constitué d'une matière présentant une faible conductibilité thermique.

13. Accumulateur de stockage de chaleur suivant la revendication 10, caractérisé en ce que le cloisonnement (42) est perméable aux gaz.

14. Accumulateur de stockage de chaleur suivant la revendication 10, caractérisé en ce que le cloisonnement (42) est constitué d'un treillis métallique.

15. Accumulateur de stockage de chaleur suivant la revendication 10, caractérisé en ce que le cloisonnement (42) est une membrane poreuse.

16. Accumulateur de stockage de chaleur suivant les revendications 10 ou 12, caractérisé en ce que la matière de remplissage (44) est constituée d'un matériau isolant microporeux.
